# EUROPEAN PATENT SPECIFICATION

(11) **EP 2 377 789 B1**
(45) Date of publication and mention of the grant of the patent: **12.06.2013**
(21) Application number: 11161819.5
(22) Date of filing: 11.04.2011
(51) Int. Cl.: B65G 47/90

(54) **Parallelogram-type egg transfer device**
Eiertransportvorrichtung in Parallelogrammform
Dispositif de transfert d'oeufs de type parallélogramme

(30) Priority: 14.04.2010 IT MI20100637
(43) Date of publication of application: 19.10.2011
(73) Proprietor: Pelbo S.p.A., 20122 Milano (IT)
(72) Inventor: Pellegrinelli, Gabriele, 20092, CINISELLO BALSAMO (MI) (IT); Pellegrinelli, Giorgio, 20092, CINISELLO BALSAMO (MI) (IT)
(74) Representative: Mittler, Enrico

(56) References cited:
- EP-A2- 0 394 724
- WO-A1-03/055653
- US-B1- 7 644 558

## Description

The present invention relates to a parallelogram-type device for transferring horizontal containers of an orderly plurality of eggs.

The industrialization of processes for distributing a multitude of eggs has led to develop systems suitable to transfer horizontal containers of eggs from a loading conveyor belt to an unloading conveyor belt.

Said containers are usually staked by the operator on the loading belt and are to be automatically unstacked, i.e. each single container should be removed from the stack and transferred to the unloading belt, which will take the eggs to a subsequent station for picking the eggs from the single horizontal container.

WO-99/06281 describes a rotary device which includes a plurality of devices for transferring egg containers. This solution has the drawback that the plant to which it belongs should be adapted to the positions which may be taken by said devices; furthermore, the arms supporting the devices have standard length. As a whole, the apparatus described in said international patent application is not very flexible and poorly productive because the rotation speed should not be excessive for the type of transferred product (centrifugal force to be kept under control).

Transfer devices which provide for an alternating swinging movement are also known: however, the rotation arm is standard and should have a minimum length to limit the lifting and unloading force. This drawback necessarily implies a certain distance of the loading and unloading conveyors, and thus a non-negligible size of the plant, and therefore a limited assembly flexibility in sheds in which the available space is often limited. As in the case of the above-mentioned rotary apparatus, the latter solution also forces to limit the transfer speed to avoid the centrifugal force from excessively increasing.

WO 03/055653 discloses a device according to the preamble of claim 1.

It is the object of the present invention to provide a device for transferring horizontal containers of an orderly plurality of eggs from a loading plane to an unloading plane, which is simple, can work at high speeds, is compact and flexible when managing the space inside a shed.

In accordance with the invention, such an object is achieved by a device for transferring horizontal containers as disclosed in claim 1.

These and other features of the present invention will become more apparent from the following detailed description of a practical embodiment thereof shown by way of non-limitative example in the accompanying drawings, in which:
figure 1 shows a top plan view of a plant with several devices according to the present invention;

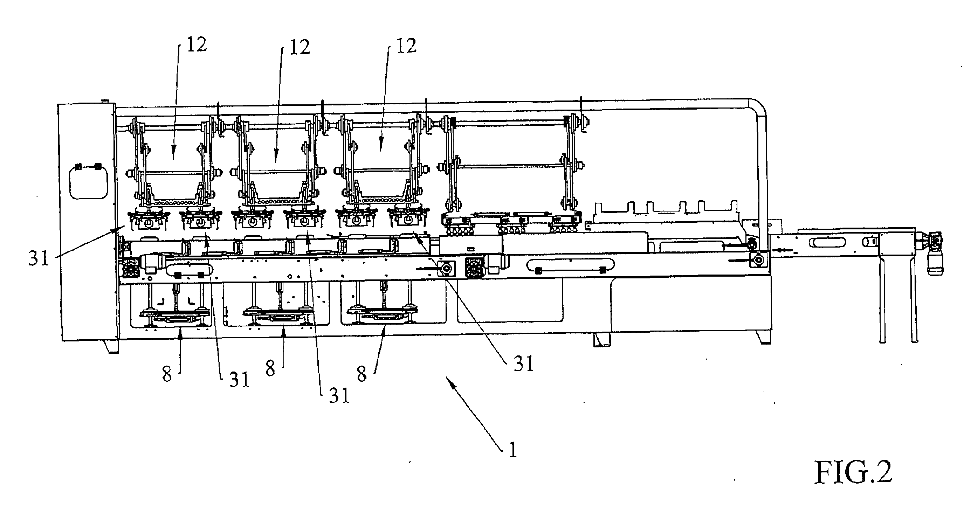

figure 2 shows a side view of the plant;
figure 3 shows a perspective view of a parallelogram device;
figure 4 shows a front view of the device during the step of loading;
figure 5 shows a side view of the device;
figure 6 shows a top plan view of the device;
figure 7 shows a front view of the device during the step of unloading;
figure 8 shows a front view of the device in all-up position;
figure 9 shows a front view of the device in all-down position;
figure 10 shows a side view of means for rotating stacks of egg containers;
figure 11 shows a top plan view of the means in figure 10.

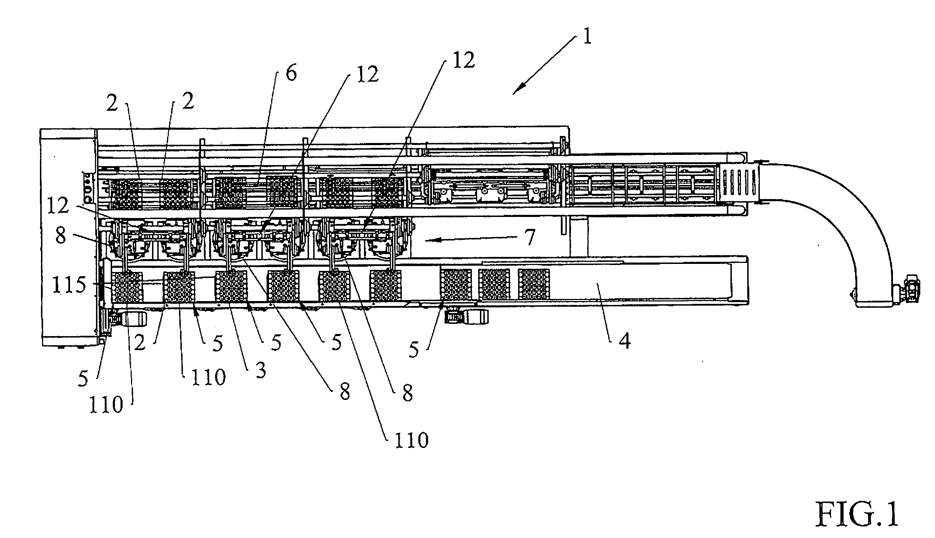

A plant 1 for transferring horizontal containers 2 of an orderly plurality of eggs 3 comprises a first conveyor 4 of stacks 5 of containers 2 and a second conveyor 6 of single containers 2 (figure 1).

Said conveyors 4, 6 are conveyor belts, for example.

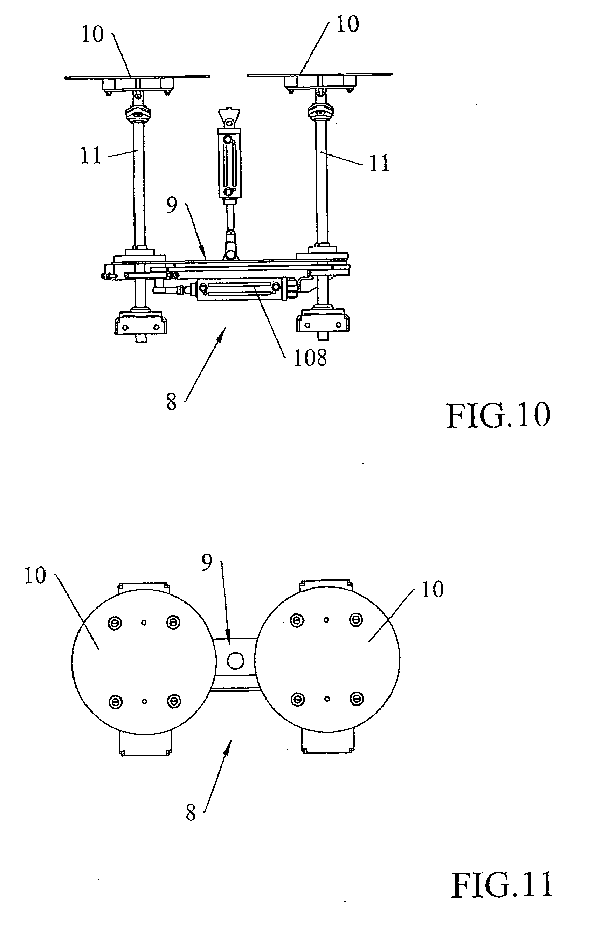

Plant 1 further includes a lane 7 between said conveyors 4, 6, which is provided with means 8 for rotating containers 2. Said means 8 (figures 10-11) include a basic structure 9 and a couple of horizontal plates 10, on which stacks 5 of containers 2 may rest, being supported by respective vertical poles 11 selectively rotatable by 90° about their vertical axis by means of pneumatic means 108. Said rotation allows to have five leading rows of eggs 3, knowing that containers 2 usually have five by six rows of eggs. Pushers 110 move the stacks 5 from conveyor 4 to lane 7.

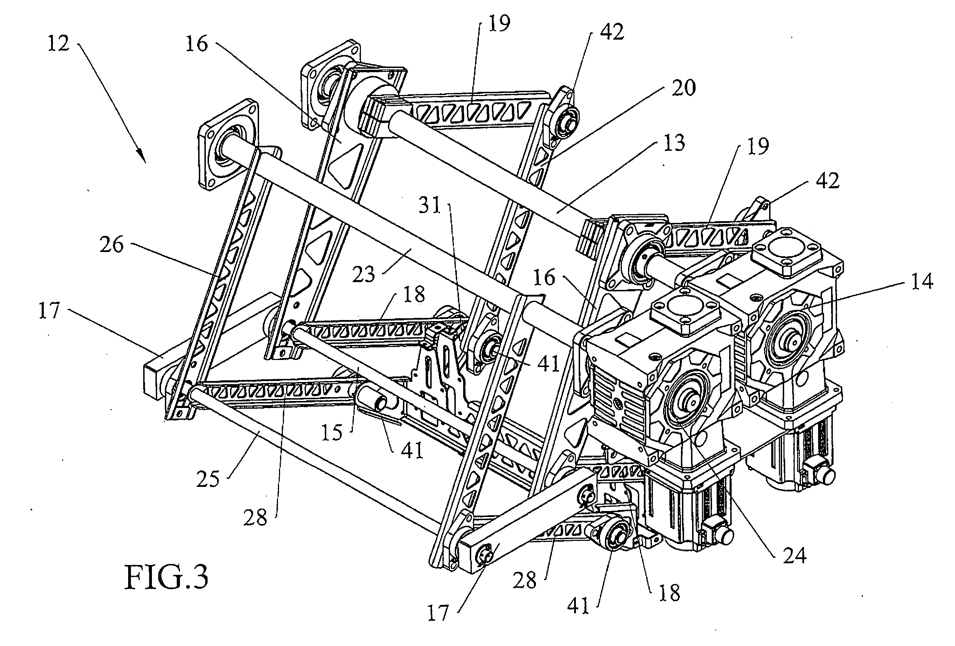

Transfer devices 12 for single containers 2, with parallelogram structure, move over the lane 7 and the unloading conveyor 6. With particular reference to figures 3-7, each device 12 comprises first 13 and second 23 horizontal drive shafts independently driven by first 14 and second 24 independent motors; first 15 and second 25 poles parallel to said shafts 13, 23 and linked thereto by means of first 16 and second 26 couples of parallel arms, respectively, e.g. section bars with through openings.

The first couple of arms 16 is free to rotate with respect to the first drive shaft 13 by using common bearings, the second couple of arms 26 is instead rigidly keyed to the second drive shaft 23.

A third couple of parallel arms 17, e.g. parallelepiped spacers to increase the rigidity of this component, is suitable to connect said poles 15, 25 by keeping them parallel to and equally spaced from each other in every instant.

Said first couple of arms 16 forms a double-parallelogram, cinematic chain with futher fourth 18, fifth 19 and sixth 20 couples of parallel arms.

A seventh couple of arms 28 connects the second pole 25 to a horizontal plate 30 supported by articulated joints 41 for the rotational connection between said fifth 19 and sixth 20 couples of arms. Further articulated joints 42 are provided in the connection between arms 19 and 20, and arms 28 and 26.

Arms 18 and 28 are keyed to the poles 15 and 25 making the rotation integral. Bearings are provided, instead, at the arms 17 to allow the rotation of poles 15, 25 with respect to said arms 17.

Plate 30 is suitable to support grasping means 31 of a container 2 of eggs 3.

In essence, arms 28, 18 and 19 are always parallel to one another, as well as the arms 16, 26 and 20. Arms 17 are always kept horizontal, as well as plate 30. Arms 26 and 19 rigidly transmit the rotary motion received from shafts 13, 23 and transmit it to the rest of the structure in which two complete parallelograms consisting of the arms 16, 19, 20 and 18 and two half-parallelograms consisting of the arms 26 and 28 may be identified.

Arms 26 and 19 can move independently because motors 14, and 24 are independently actuated. Precisely due to this independence, the arm configurations described below for grasping and unloading containers 2 can be implemented.

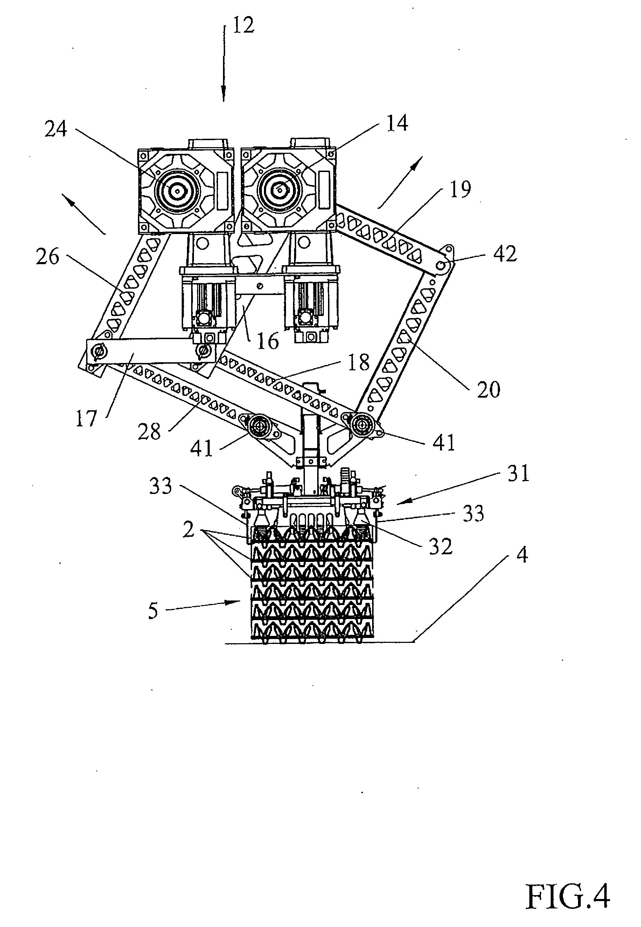

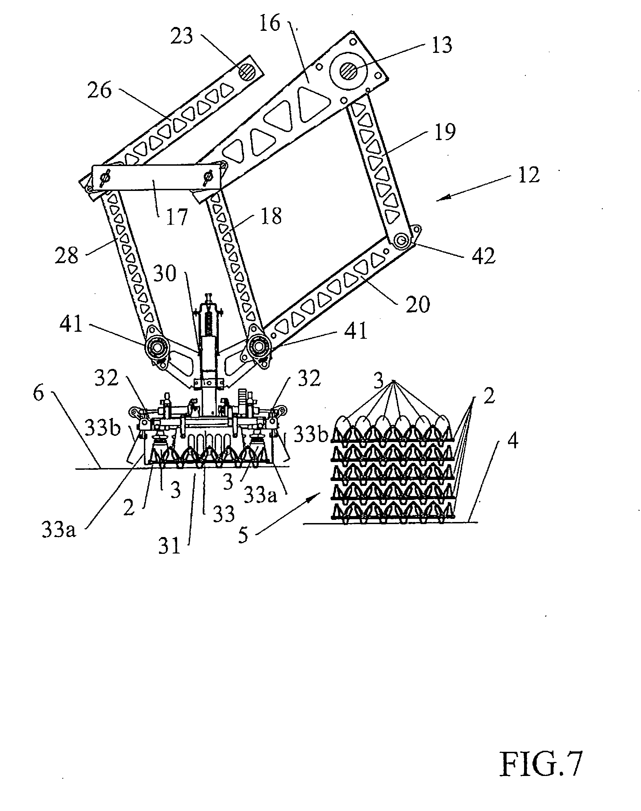

By means of vertical pins 34, plate 30 supports a couple of grasping means 31 (figures 4-9) of a single container 2; each grasping means 31 comprises a plurality of vacuum suction caps 32 for grasping the single eggs 3, and two couples of jaws 33 suitable to grasp the container 2 from underneath. Each couple of jaws 33 is selectively movable between a grasping position 33a and a releasing position 33b (figure 7).

Functionally, each container 2 is transferred from the loading conveyor 4 to the unloading conveyor 6 as follows.

Suitable sensors in combination with separators 115 arrange stacks 5 in front of respective rotation means 8. Pushers 110 move said stacks 5 onto plates 10, which rotate to display the containers 2 with five leading rows of eggs 3.

Shafts 13, 23 are then actuated, which rotate by such an amount to place the grasping means 31 slightly over the container 2 at the top of stack 5.

A software conveniently managed by a control unit 200 (not shown) will define the rotation of shafts 13, 26 for positioning the grasping means 31 at a given variable height according to the height of stack 5, i.e. to the number of stacked containers 2. Sensors (not shown) will inform the control unit 200 about the height of stack 5 in each instant, which height will vary upon picking the stacked containers 2 in sequence. This functionality allows to avoid lifting means combined with the rotation means from being used. In known systems, rotating the stack is not only needed, but also gradually lifting it to compensate for the reduction of containers 2 in the stack 5. Indeed, known transfer devices do not provide for a fixed transfer trajectory. Not needing to lift the stacks 5 avoids problems of handling/stability of the containers, avoids dirt from accumulating if some eggs are broken, and determines the reduction of working time because the transfer device no longer needs to wait for the stack 5 either to be lifted during the step of loading a container 2 or to descend for loading a new stack 5. Device 12 further fits to stacks 5 of different heights, usually consisting of six containers 2: known systems are mounted for a predetermined number of stacked containers, which is difficult to be changed unless the system is reassembled. Device 12 according to the present invention is instead very flexible: the arm movement, and therefore the trajectory of the grasping means 21, may be easily programmed by the control unit 200.

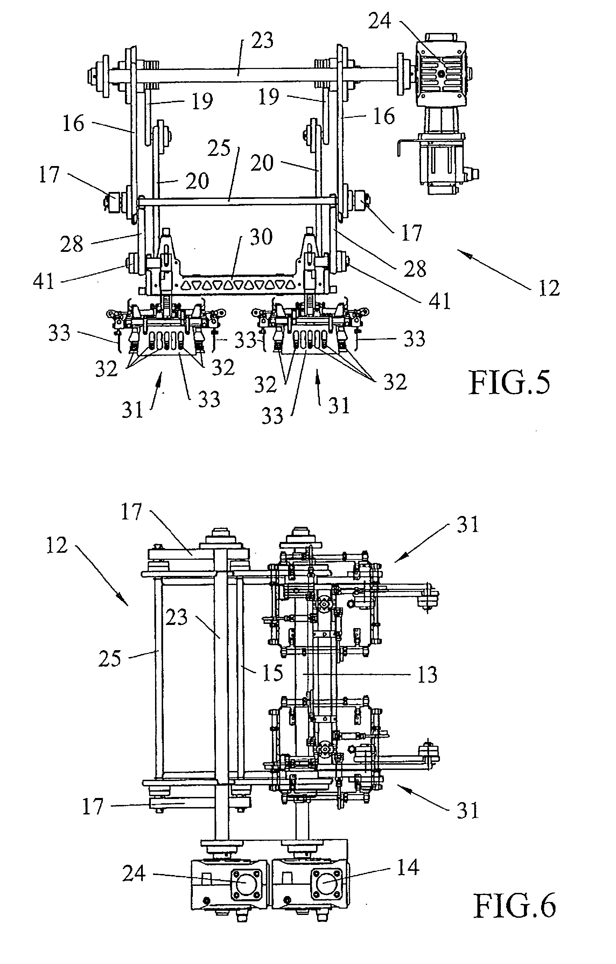

Once the correct loading position has been reached, as shown in figure 4, the control unit 200 actuates suction caps 32 and jaws 33, thus determining the grasping of the first container 2 from the top of stack 5. As apparent in figures 5 and 6, each device 12 comprises two grasping means 31 and therefore grasping will be double, in turn to be multiplied by the number of devices 12 in series. The example in figure 1 shows three devices 12, but a greater number of devices 12 may be attached to shafts 13, 23 according to the required productivity.

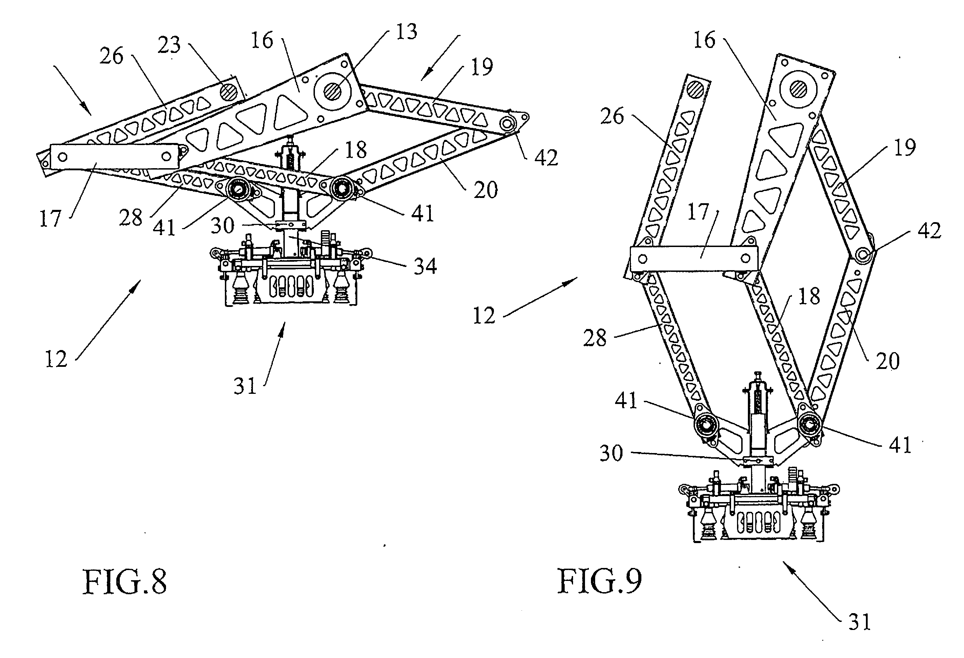

Once the containers 2 have been grasped, the rotation of shafts 13, 23 is actuated: shaft 23 (i.e. the arms 26) is rotated clockwise, shaft 14 (i.e. the arms 19, compare figures 4 and 7) counterclockwise; the grasping means will be lifted and will move towards the unloading conveyor 6 going firstly to the raised position shown in figure 8; from this intermediate position, in order to cause the descent of the means 31, towards the unloading position (figure 7, the unloading conveyor 6 is shown at a different height for clarity), the rotation of shafts 13 and 23 should be reversed with different rotation speeds, otherwise means 31 would return to the same loading position.

It is thus essential for the arms 26 and 19 to indepedently rotate, i.e. in possibly different directions and at different speeds.

With container 2 resting on the unloading conveyor 6 as shown in figure 7, suction caps 32 are deactivated and jaws 33 are opened.

Conveyor 6 can now feed the single container 2 towards a subsequent station (not shown) e.g. for removing eggs 3 from container 2.

The above-described operation is repeated until all containers 2 of stack 5 are exhausted. When one stack 5 ends, a subsequent stack is loaded onto means 8 by pushers 110 again.

The software advantageously defines the positions which may be taken by the grasping means 31 according to the rotation and reciprocal speed of shafts 13, 23.

The distance between loading and unloading conveyors 4, 6 may be advantageously set as desired without technical limitations due to device 12.

The same device 12 may also support more than two grasping means 31, by appropriately dimensioning the structure components.

Infinite positions of the grasping means 31 may be defined, thus ensuring maximum flexibility, by modifying the arm dimensions.

## Claims

1. Device (12) for transferring horizontal containers (3) of an orderly plurality of eggs (3) from a loading plane (4) to an unloading plane (6),
comprising
a first (13) and a second (23) horizontal drive shaft independently driven by a first (14) and a second (24) independent motor,
**characterized in that** it comprises a first (15) and a second (25) pole parallel to said shafts (13, 23) and linked thereto by means of respectively a first (16) and a second (26) couple of parallel arms,
a third couple of parallel arms (17) suitable to connect said poles (15, 25) by keeping them parallel to and equally spaced from each other in every instant,
said first couple of arms (16) forming with subsequent fourth (18), fifth (19) and sixth (20) couple of parallel arms a double parallelogram cinematic chain, said fifth (19) couple of arms being keyed to the first (13) drive shaft,
a seventh couple of arms (28) connecting the second pole (25) to a horizontal plate (30) supported by articulated joints (41) for connecting said fifth (19) and sixth (20) couple of arms, suitable to support grasping means (31) of a container (2) of eggs (3),
the fourth (18), fifth (19) and seventh (28) couple of arms being always parallel to one another, as well as the first (16), second (26) and sixth (20) couples of arms.

2. Device (12) according to claim 1, **characterized in that** the second (26) and fifth (19) couple of arms are keyed respectively to the second (23) and the first (13) drive shaft.

3. Device (12) according to claim 2, **characterized in that** the sixth couple of arms (20) is rotatably connected to the fourth (18) and fifth (19) couple of arms, the first couple (16) being free to rotate in respect of the first drive shaft (13), the fourth couple of arms (18) being keyed to the pole (15).

4. Device (12) according to claim 3, **characterized in that** the seventh couple of parallel arms (28) is rigidly keyed to the second pole (25).

5. Device (12) according to claim 3 or 4, **characterized in that** said poles (15, 25) are rotatably and perpendicularly connected to the third couple of arms (17).

6. Device (12) according to any of the preceding claims, **characterized in that** said grasping means (3 1) comprise suction cups (32) for grasping the eggs (3) and jaws (33) for lateral grasping of the container (2).

7. Plant (1) for transferring horizontal containers (3) of an orderly plurality of eggs (3) from a loading plane (4) to an unloading plane (6), **characterized in that** it provides rotation means (8) for stacks (5) of containers (2), and at least a device (12) according to any one of the preceding claims.

8. Plant (1) according to claim 7, **characterized in that** said rotation means (8) are provided in correspondence of a lane (7) intermediate between said loading (4) and unloading (6) planes, the devices (12) moving above said lane (7) and said discharge plane (6).

9. Plant according to claims 7 or 8, **characterized by** the fact that said load (4) and unload (6) planes are conveyors.

## Patentansprüche

1. Vorrichtung (12) zum Transport von horizontalen Behältern (3) mit einer geordneten Anzahl von Eiern (3) von einer Beladeebene (4) zu einer Entladeebene (6), welche eine erste (13) und eine zweite (23) horizontale Antriebswelle aufweist, welche durch einen ersten (14) und einen zweiten (24) unabhängigen Motor unabhängig angetrieben sind,
**dadurch gekennzeichnet, dass**
- sie ein erstes (15) und ein zweites (25) stabförmiges Distanzelement parallel zu den Wellen (13, 23) aufweist, welche jeweils mittels einem ersten (16) und einem zweiten (26) Paar von parallelen Armen mit diesen verbunden sind,
- ein drittes Paar von parallelen Armen (17), welche in geeigneter Weise die stabförmigen Distanzelemente (15, 25) so verbinden, dass sie parallel zueinander zu jedem Zeitpunkt und in einem gleichen Abstand voneinander gehalten sind,
- das erste Paar von Armen (16) mit folgenden vierten (18), fünften (19) und sechsten (20) parallelen Armen eine kinematische Doppelparallelogrammkette bildet, wobei das fünfte (19) Paar von Armen mittels einer Keilverbindung mit der ersten (13) Antriebswelle gekoppelt ist,
- ein siebtes Paar von Armen (28), welche das zweite stabförmige Distanzelement (25) mit einer horizontalen Platte (30) verbinden, welche mittels Gelenkverbindungen (21) zum Verbinden des fünften (19) und sechsten (20) Paares von Armen gelagert ist und die in geeigneter Weise eine Greifeinrichtung (31) für einen Behälter (2) mit Eiern (3) tragem,
- die vierten (18), fünften (19) und siebten (28) Paare von Armen parallel zueinander sind, sowie auch die ersten (16), zweiten (26) und sechsten (20) Paare von Armen.

2. Vorrichtung (12) nach Anspruch 1, **dadurch gekennzeichnet, dass** die zweiten (26) und fünften (19) Paare von Armen mittels einer Greifverbindung mit der zweiten (23) und der ersten (13) Antriebswelle verbunden sind.

3. Vorrichtung (12) nach Anspruch 2, **dadurch gekennzeichnet, dass** das sechste Paar von Armen (20) drehbeweglich mit dem vierten (18) und fünften (19) Paar von Armen verbunden ist, das erste Paar (16) sich bezüglich der Antriebswelle (13) frei drehen kann und das vierte Paar von Armen (18) mittels einer Keilverbindung mit dem stabförmigen Distanzelement (15) verbunden ist.

4. Vorrichtung (12) nach Anspruch 3, **dadurch gekennzeichnet, dass** das siebte Paar von parallelen Armen (28) starr mittels einer Keilverbindung mit dem zweiten stabförmigen Distanzelement (25) verbunden ist.

5. Vorrichtung (12) nach Anspruch 3 oder 4, **dadurch gekennzeichnet, dass** die stabförmigen Distanzelemente (15, 25) drehbeweglich und senkrecht mit dem dritten Paar von Armen (17) verbunden sind.

6. Vorrichtung (12) nach einem der vorangehenden Ansprüche, **dadurch gekennzeichnet, dass** die Greifeinrichtung (31) Saugnäpfe (32) zum Ergreifen der Eier (3) und Backen (33) zum seitlichen Ergreifen des Behälters (2) aufweist.

7. Anlage (1) zum Transportieren von horizontalen Behältern (3) mit einer geordneten Anzahl von Eiern (3) von einer Beladeebene (4) zu einer Entladeebene (6), **dadurch gekennzeichnet, dass** eine Dreheinrichtung (8) für Stapel (5) von Behältern (2) und wenigstens eine Einrichtung (12) nach einem der vorangehenden Ansprüche vorgesehen sind.

8. Anlage (1) nach Anspruch 7, **dadurch gekennzeichnet, dass** die Dreheinrichtung (8) unter Zuordnung zu einer Bahn (7) zwischen der Beladeebene (4) und der Entladeebene (6) versehen ist, wobei die Einrichtung (12) sich über der Bahn (7) und der Entladeebene (6) bewegt.

9. Anlage nach einem der Ansprüche 7 oder 8, **gekennzeichnet durch** die Tatsache, dass die Beladeebenen (4) und Entladeebenen (6) von Förderern gebildet werden.

## Revendications

1. Dispositif (12) destiné à transférer des boîtes horizontales (3) d'une pluralité ordonnée d'oeufs (3) d'un plan de chargement (4) à un plan de déchargement (6), comprenant
des premier (13) et deuxième (23) arbres d'entraînement horizontaux entraînés indépendamment par des premier (14) et deuxième (24) moteurs indépendants, **caractérisé en ce qu'**il comprend
des première (15) et deuxième (25) barres parallèles auxdits arbres (13, 23) qui leur sont reliées au moyen de premier (16) et deuxième (26) couples de bras parallèles respectivement,
un troisième couple de bras parallèles (17) adapté pour relier lesdites barres (15, 25) en les maintenant parallèles et équidistantes l'une de l'autre à chaque instant,
ledit premier couple de bras (16) formant avec des quatrième (18), cinquième (19) et sixième (20) couples de bras parallèles suivants, une chaîne cinématique à double parallélogramme, ledit cinquième (19) couple de bras étant claveté au premier arbre d'entraînement (13),
un septième couple de bras (28) reliant la deuxième barre (25) à une plaque horizontale (30) supportée par des joints articulés (41) pour relier lesdits cinquième (19) et sixième (20) couples de bras, adapté pour supporter un moyen de préhension (31) d'une boîte (2) d'oeufs (3),
les quatrième (18), cinquième (19) et septième (28) couples de bras étant toujours parallèles les uns aux autres, ainsi que les premier (16), deuxième (26) et sixième (20) couples de bras.

2. Dispositif (12) selon la revendication 1, **caractérisé en ce que** les deuxième (26) et cinquième (19) couples de bras sont clavetés respectivement aux deuxième (23) et premier (13) arbres d'entraînement.

3. Dispositif (12) selon la revendication 2, **caractérisé en ce que** le sixième couple de bras (20) est relié en rotation aux quatrième (18) et cinquième (19) couples de bras, le premier couple (16) étant libre de tourner par rapport au premier arbre d'entraînement (13), le quatrième couple de bras (18) étant claveté à la barre (15).

4. Dispositif (12) selon la revendication 3, **caractérisé en ce que** le septième couple de bras parallèles (28) est claveté de façon rigide à la deuxième barre (25).

5. Dispositif (12) selon la revendication 3 ou 4, **caractérisé en ce que** lesdites barres (15, 25) sont reliées en rotation et perpendiculairement au troisième couple de bras (17).

6. Dispositif (12) selon l'une des revendications précédentes, **caractérisé en ce que** ledit moyen de préhension (31) comprend des ventouses (32) pour saisir les oeufs (3) et des mâchoires (33) pour la saisie latérale de la boîte (2).

7. Installation (1) destinée à transférer des boîtes horizontales (3) d'une pluralité ordonnée d'oeufs (3) d'un plan de chargement (4) à un plan de déchargement (6), **caractérisée en ce qu'**elle fournit des moyens de rotation (8) pour des piles (5) de boîtes (2), et au moins un dispositif (12) selon l'une quelconque des revendications précédentes.

8. Installation (1) selon la revendication 7, **caractérisée en ce que** lesdits moyens de rotation (8) sont prévus en correspondance avec une voie (7) intermédiaire entre lesdits plans de chargement (4) et de déchargement (6), les dispositifs (12) se déplaçant au-dessus de ladite voie (7) et dudit plan de déchargement (6).

9. Installation selon la revendication 7 ou 8, **caractérisée par le fait que** lesdits plans de chargement (4) et de déchargement (6) sont des dispositifs de transport.
